# EUROPÄISCHE PATENTSCHRIFT

(11) **EP 1 735 539 B1**
(45) Veröffentlichungstag und Bekanntmachung des Hinweises auf die Patenterteilung: **13.03.2013**
(21) Anmeldenummer: 05729354.0
(22) Anmeldetag: 12.04.2005
(51) Int. Cl.: F16B 5/06, F16L 3/02, H02G 3/32

(54) **BEFESTIGUNGSSYSTEM**
FASTENING SYSTEM
SYSTEME DE FIXATION

(30) Priorität: 15.04.2004 AT 6472004
(43) Veröffentlichungstag der Anmeldung: 27.12.2006
(73) Patentinhaber: Dietzel Gesellschaft m.b.H, 1111- Wien (AT)
(72) Erfinder: GOLD, Alexander, A-1030 Wien (AT)
(74) Vertreter: Ellmeyer, Wolfgang
(86) Internationale Anmeldenummer: PCT/AT2005/000124
(87) Internationale Veröffentlichungsnummer: WO 2005/100801

(56) Entgegenhaltungen:
- EP-A- 0 105 865
- EP-A- 1 061 273
- AT-B- 392 726
- BE-A1- 799 845
- DE-A1- 4 123 754
- DE-U1- 9 305 668
- US-B1- 6 305 892

## Beschreibung

Die Erfindung betrifft ein Befestigungssystem, welches einen Steckdübel und ein Funktionselement umfaßt, wobei der Steckdübel mit seinem Dübelkopf in eine Befestigungsöffnung des Funktionselements einsetzbar und das Funktionselement durch Einbringen des Dübelschafts in ein Loch befestigbar ist, wobei der Steckdübel im Loch drehfest selbstklemmend ist und das Funktionselement gegenüber dem in das Funktionselement eingesetzten Dübelkopf frei um die Längsachse des Steckdübels verdrehbar ist, wobei der Dübelkopf eine Rastvorrichtung aufweist, sodaß er in seiner in das Funktionselement eingesetzten Stellung mit diesem verrastbar ist, wobei der Steckdübel in seiner verrasteten Stellung das Funktionselement drehbar lagert.

Befestigungssysteme aus Steckdübeln und Funktionselementen dieser Art ermöglichen die Befestigung von verschiedensten Elementen oder Bauteilen an Wänden, Decken oder anderen Baukörpern auf einfache und rationelle Weise. Beispielsweise wird durch händische Einbringung der Steckdübel ohne Anwendung von Werkzeugen in Bohrlöcher die dauerhafte Befestigung von Kabel- und Rohrbefestigungselementen erreicht, in welchen dann die zugehörigen Kabeln und Rohre fixiert werden können. Die Erfindung ist aber nicht auf die Installationstechnik allein beschränkt, sondern kann generell für Befestigungssysteme jeglicher Art Anwendung finden.

Bisher bekannte Befestigungssysteme, wie sie insbesondere auf dem Gebiet der Elektro-Instailationstechnik angewandt werden, ermöglichen zwar ein rasches Festlegen eines Funktionselements, z.B. einer Klemmschelle, an einer Wand, ein Nachjustieren desselben ist aber nur in sehr eingeschränkter Weise möglich. Sollen nun aber sehr lange Rohre oder Leitungen verlegt werden, so kommt es im Verlauf des Montagevorganges zwangsläufig zu gewissen Abweichungen bei der Anbringung von Bohrlöchern und beim Dübel-Einsteckvorgang, die ausgeglichen werden müssen. Besonders eine Fehlorientierung des Funktionselements gegenüber dem Steckdübel bereitet in der Praxis Schwierigkeiten.

In der EP 105 865 ist ein Befestigungselement für Installationsrohre an einer Wand oder Decke gezeigt, das einen Schaft mit Spreizkörpern an der Schaftoberfläche zur kraftschlüssigen Verbindung mit der Bohrlochwand aufweist. Im Kopfbereich des Schaftes sind schräggestellte Schenkel vorgesehen, die beim Einschieben des Schaftes in das Bohrloch in eine Strecklage gedrückt werden. Die Schenkel weisen eine Verzahnung zum Eingriff mit Fortsätzen von Klemmbacken auf, sodass die zentrische Lage der Klemmbacken gesichert ist.

Besteht eine Schraubverbindung zwischen dem Steckdübel und dem Funktionselement, so kann das Funktionselement hilfsweise entweder fester oder leichter als vorgesehen angezogen werden, worunter aber die Langzeithaltbarkeit der Befestigung leidet.

Ein gewaltsames Verdrehen eines Steckdübels innerhalb des Bohrloches, in dem dieser eingesteckt ist, führt ebenfalls zu einer Schwächung der Sitzfestigkeit, welche zu einer Lockerung der Befestigung führen kann.

In der EP 1 061 273 A2 ist eine Steckdübelsystem zur ortsfesten Halterung von Körpern an einem Untergrund beschrieben, das aus der Haltevorrichtung und dem die Haltevorrichtung befestigenden Steckdübel gebildet ist, der in das Bohrloch einsteckbar und drehfest selbstklemmend ist. Die Haltevorrichtung wird über ein Gewinde auf den aus der Mauer vorragenden Steckdübel aufgeschraubt und dabei satt zur Auflage an den Untergrund gebracht werden, wobei der Dübel durch die entgegen der Einsteckrichtung aufgebrachte Zugspannung verspannt wird. Die ordnungsgemäße Anbringung ist daher auf einen bestimmten engen Winkelbereich der Verdrehung beschränkt.

Ebenfalls ein Steckdübelsystem mit einem im Bohrloch verspannbaren Steckdübel ist in der DE 93 05 668 U1 angegeben, allerdings weist der in einer Öffnung einer Haltevorrichtung verrastbare Dübelkopf einen rechteckigen Querschnitt auf, wie in Fig.2 dieser Druckschrift gezeigt, sodaß nach dem Verrasten eine freie Verdrehung nicht möglich ist.

Beim Stecksystem gemäß DE 41 23 754 A1 weist ein Halteelement einen Schellenkörper auf, in dessen unterem Bereich ein Befestigungsmittel mit Schaft und Kopf gehaltert ist. Das Befestigungsmittel ist mittels Dübelschaft in ein Bohrloch eintreibbar. Der mit zwei radial abstehenden Kragen ausgestattete Dübel ist quer zur Dübellängsachse in den Schellenkörper einschiebbar. Dabei ist der schlitzartige Querschnitt zum Einbringen des Dübels so dimensioniert, daß sich eine dauerhafte Halterung ergibt (Spalte 3, Zeile 22), während eine Verdrehbarkeit nicht bezweckt ist. Das ergibt sich auch aus dem Dübel, der mittels Schlagschraube fixiert wird und der in seinem Bohrloch nicht drehfest selbstklemmend ist. Bei einem Verdrehen des Halteelements kann es daher dazu kommen, daß der Dübel im Bohrloch mitgedreht wird, wodurch sein Sitz im Bohrloch verschlechtert wird und dies zu einem Loslösen führen kann.

In gleicher Weise ist in der BE 799 845 A1 zwar eine Verrastbarkeit von Dübel und Halteelement vorgesehen, eine Verdrehbarkeit ist aber deswegen nicht vorgesehen, weil das Halteelement immer satt auf der Wand zu liegen kommt und Unebenheiten derselben während eines Verdrehvorganges zu Zugkräften auf den Dübel führen, die ein Lockern bewirken können. Weiters ist der Dübel selbst entlang seiner Längsseite geschlitzt ausgeführt und damit je nach Genauigkeit des Bohrlochdurchmessers an seinem herausstehenden Ende einmal mehr und einmal weniger weit geöffnet, sodaß sicherlich keine Drehlagerung beabsichtigt ist. Überdies ist der gezeigte Dübel nicht gegen ein Verdrehen im Bohrloch gesichert und wird daher bei einem Verdrehen des Halteelements unweigerlich mitverdreht werden, woraus ein Lockerwerden innerhalb des Bohrloches resultieren kann.

Aufgabe der Erfindung ist es daher, ein Befestigungssystem der eingangs genannten Art anzugeben, bei welchem eine nachträgliche Justierung des Funktionselements keine nachteiligen Auswirkungen auf die maximale Belastbarkeit der Funktionselements-Befestigung und auf die Festigkeit des Sitzes des Steckdübels im Bohrloch bzw. auf die Dauerhaftigkeit einer Funktionselement-Anbringung hat.

Erfindungsgemäß wird dies dadurch erreicht, daß durch die Rastvorrichtung der Steckdübel entlang der Längsrichtung des Steckdübels unverrückbar lagert, und daß die Befestigungsöffnung des Funktionselements langlochartig ausgebildet ist, sodaß neben der Verdrehbarkeit des Dübelkopfes auch eine Verschiebbarkeit des Funktionselements gegeben ist.

Dies ermöglicht eine Justage des Funktionselements bei einem bereits in ein Bohrloch eingebrachten Steckdübel, ohne dessen Sitz im Bohrloch zu verändern und ohne eine Veränderung der Steckdübelposition in Achsrichtung, wie es z.B. bei einer Schraubverbindung zwischen Funktionselement und Steckdübel möglich ist. Herkömmliche Steckdübel weisen diese Eigenschaft nicht auf, sodaß bereits beim Einstecken der Dübel-Funktionselement-Kombination eine exakte Ausrichtung des Funktionselements in der gewünschten End- bzw. Gebrauchsposition zwingend notwendig ist, die zu einem zusätzlichen Arbeitsaufwand führt, der beim erfindungsgemäßen Befestigungssystem vermieden werden kann, weil eine Nachjustierung auf einfache Weise möglich ist.

Eine Ausführungsform der Erfindung kann darin bestehen, daß das Funktionselement eine Installations-Klemmschelle ist.

Gemäß einer anderen Variante der Erfindung kann das Funktionselement ein Kabelträger sein.

Es kann das Funktionselement aber auch jedes beliebige an einem Baukörper, wie einer Wand, einer Decke od. dgl. befestigbare Element sein.

Eine zuverlässige Anbringung der Spreizkörper auf dem Dübelschaft ist darüber hinaus erzielbar, wenn der Dübelschaft durch einen stabförmigen Schaftkörper gebildet ist.

Eine weitere mögliche Ausführungsform der Erfindung kann darin bestehen, daß die Spreizkörper - in an sich bekannter Weise - durch elastisch-gelenkig an den Breitseiten des stabförmigen Schaftkörpers angeformte Exzenterkörper gebildet sind, die jeweils eine vom Dübelschaft weg orientierte gekrümmte Abrollfläche, z.B. in Form einer Kugelteilfläche aufweisen. Die während des Einsteckvorganges in das Bohrloches sich entlang der Abrollflächen in Richtung zum Dübelschaft verdrehenden Exzenterkörper verhindern ein Herausziehen des eingesteckten Steckdübels aus dem Bohrloch, weil die Abrollfächen so an der Bohrlochwandung anliegen, daß die Exzenterkörper sich bei Ausüben einer Zugkraft auf den Steckdübel in Richtung einer vom Dübelschaft wegstehenden Position verschwenken und damit im Bohrloch verspreizen.

In bekannter Weise können die Exzenterkörper über elastische Gelenkstege schwenkbar mit dem Schaftkörper verbunden sein und zusätzlich können in Weiterbildung der Erfindung auf die Exzenterkörper wirkende Vorspannmittel vorgesehen sein, welche die Exzenterkörper gegen das auf sie während des Einsteckvorganges wirkende Drehmoment vorspannen. Dadurch wird beim Einstecken des Steckdübels in das Bohrloch ein zusätzlicher Anpreßdruck auf die Spreiz- oder Exzenterkörper ausgeübt und damit eine schnelle Verspreizung derselben begünstigt.

Dabei können die Gelenkstege sich in Ebenen senkrecht zur Dübellängsachse erstrecken, und die Vorspannmittel als in einem rechtem Winkel zu den Gelenksteg-Ebenen und zu den Breitseiten des Schaftkörpers verlaufende Federstege zwischen dem Schaftkörper und den Exzenterkörpern angeformt sein.

Gemäß einer Variante können die Federstege zum Ausüben einer Vorspannung auf die Spreiz- bzw. Exzenterkörper dreieckförmig ausgebildet sein. Die Form dieser Federstege unterliegt im Rahmen der Erfindung aber keiner Einschränkung Weiters können sämtliche Federstege in einer durch die Dübellängsachse verlaufenden Ebene liegen, die in einem rechten Winkel zu den Breitseiten des Schaftkörpers steht. Dies ermöglicht eine symmetrische Ausrichtung der Federstege und damit eine gleichmäßige Wirkung der Vorspannkräfte auf alle Spreiz- bzw. Exzenterkörper.

Die Verspreizwirkung der Exzenterkörper kann noch erhöht werden, indem gemäß - einer Weiterbildung der Erfindung jeweils ein oder mehrere, vorzugsweise sichelförmige Spreizstege auf den Abrollflächen der Exzenterkörper angeformt sind, die im nicht eingesteckten Zustand des Steckdübels jeweils ungefähr in einem rechten Winkel zur Dübellängsachse aus dem Dübelquerschnitt vorragen. Nach dem Einbringen des Steckdübels in das Bohrloch sorgen derartige Spreizstege, die in Form und Anzahl variierbar sind, für eine zusätzliche Verspreizung des Steckdübels innerhalb des Bohrloches.

Eine weitere Ausführungsform der Erfindung kann weiters darin bestehen, daß im Bereich des Dübelkopfes zumindest eine zur Dübellängsachse konzentrische Stützscheibe auf dem Dübelschaft angeordnet ist, die sich in einer zur Dübellängsachse senkrecht verlaufenden Ebene erstreckt und einen Durchmesser aufweist, der größer als der Dübel-Nenndurchmesser ist. Durch die beim Einstecken des Steckdübels auftretende Verformung der zumindest einen Stützscheibe tritt eine resultierende Kraft auf, die den Steckdübel in das Bohrloch hineinzieht und damit ein geringfügiges Zurückrutschen des Steckdübels bis zum Einsetzen der Verspreizwirkung der Spreiz- bzw. Exzenterkörper verhindern hilft.

Eine Erhöhung der dadurch erreichten Vorspannungswirkung kann dadurch erreicht werden, daß mehrere gleich beabstandete, konzentrische Stützscheiben vorgesehen sind, deren Durchmesser in Richtung zum Dübelkopf progressiv ansteigt.

Der im Bohrloch befindliche Bohrstaub kann dazu führen, daß der Steckdübel nur unter erhöhter Kraftanstrengung oder nicht vollständig in das Bohrloch eingebracht werden kann. Dies kann gemäß einer weiteren Fortbildung der Erfindung dadurch vermieden werden, daß an zumindest einer Schmalseite des stabseitigen Schaftkörpers eine Längsrille zum Abführen von Materialrückständen ausgebildet ist, welche eine Ableitung des Bohrmaterials während des Einsteckvorganges des Dübels in Richtung zum Dübelkopf hin ermöglicht, wo diese Rückstände beim Einstecken des Dübels keinen zusätzlichen Widerstand hervorrufen. Sofern auch die vorgenannten Stützscheiben auf dem Steckdübel vorgesehen sind, werden die in Richtung des Dübelkopfes geleiteten Materialrückstände kompaktiert und tragen über Ausbildung zusätzlicher Reibungskräfte zur Erhöhung der Haltbarkeit des Steckdübels im Bohrloch bei.

Weiters kann im Bereich des Dübelkopfes eine zur Dübellängsachse konzentrische Abschlußscheibe auf dem Dübelschaft angeordnet sein, welche einen Durchmesser aufweist, der ungefähr dem Dübel-Nenndurchmesser entspricht. Diese schließt das Bohrloch im eingesteckten Zustand des Steckdübels ab und verhindert ein späteres Austreten von Bohrrückständen aus dem Bohrloch im Gebrauchszustand.

Schließlich kann in weiterer Fortbildung der Erfindung am freien Ende des Dübelschaftes ein im Querschnitt im wesentlichen kreuzförmiges Dübelführungselement angeordnet sein, welches das Einführen des Steckdübels in das Bohrloch erleichtert.

Eine konstruktiv einfache Realisierung eines solchen Führungselements läßt sich dabei erreichen, indem das kreuzförmige Dübelführungselement durch zwei zu den Breitseiten des Dübelgrundkörpers im rechten Winkel angeformten Führungsrippen gebildet ist.

Um ein Verkanten des Steckdübels zu verhindern, kann das kreuzförmige Dübelführungselement zum Dübelschaftende hin abgerundet verlaufen.

Schließlich kann eine weitere Ausführungsform der Erfindung darin bestehen, daß das Funktionselement mit der Hand so verformbar ist, daß der in das Funktionselement eingesetzte Steckdübel entsprechend dem Grad der Verformung um einen Abstand weiter aus dem Funktionselement vorragt. Wird das verformte Funktionselement im vollständig in das Bohrloch eingesteckten Zustand des Steckdübeis wieder in seinen unverformten Zustand übergeführt, so bewirkt dies eine geringe Bewegung des Steckdübels aus dem Bohrloch heraus, sodaß die bereits einsetzende Verkeilwirkung im Bohrloch gesteigert wird.

Weiters ist eine Klemmschelle für Rohre realisierbar, insbesondere zur Aufnahme elektrischer Leitungen, mit einer Aufnahmeöffnung für ein Rohr und quer zur Längsachse der Rohr-Aufnahmeöffnung verlaufenden Vertiefungen zum Einschnappen in eine Profilschiene sowie parallel zur Längsachse der Rohraufnahmeöffnung verlaufenden Nuten und gegengleichen Federn zum stirnseitigen Verbinden mit weiteren Klemmschellen, wobei eine Befestigungsöffnung zum Einbringen eines Befestigungselements ausgebildet ist.

Um eine Anwendung in sämtlichen bekannten Befestigungssystemen und im erfindungsgemäßen Befestigungssystem zu ermöglichen, ist vorgesehen, daß die Befestigungsöffnung einen Durchmesser aufweist, der das Einbringen eines Steckdübels ermöglicht.

Die Klemmschelle kann somit zur Verwendung in einem Befestigungssystem als auch in einem herkömmlichen Schienenbefestigungssystem eingesetzt werden. Ferner wird ein Verfahren zum Einstecken eines in einem Funktionselement eingesetzten Steckdübels in ein Bohrloch angegeben.

Um die Festigkeit des Steckdübelsitzes zu erhöhen, wird vor dem Einstecken des Steckdübels in das Bohrloch das Funktionselement mit der Hand so verformt, daß der Steckdübel um einen Abstand weiter aus dem Funktionselement vorragt als im unverformten Zustand, und die gesamte vorragende Länge des Steckdübels wird in das Bohrloch eingebracht, und danach wird die Verformung des Funktionselements durch Loslassen desselben aufgehoben, wodurch auf den Steckdübel im Bohrloch eine Zugspannung ausgeübt wird, welche die Verkeilung des Steckdübels im Bohrloch erhöht.

Eine Variante des Verfahrens kann dabei unter Anwendung eines erfindungsgemäßen Befestigungssystems darin bestehen, daß die Installations-Klemmschelle durch Zusammendrücken ihrer Klemmschenkel vor dem Einstecken des Steckdübels verformt wird. Die Klemmschenkel können dabei mit den Fingern einer Hand rasch und ohne zusätzliche Hilfsmittel so zusammengedrückt werden, daß die Klemmschelle nachgibt und der Steckdübel entsprechend weiter aus der Klemmschelle vorragt. Nach dem Loslassen der Klemmschelle im eingesteckten Zustand des Steckdübels wird dieser durch die elastische, rücktreibende Kraft der verformten Klemmschelle, die sich in den unverformten Zustand zurückbewegt, im Bohrloch verspannt und sitzt in diesem nunmehr fest.

Nachfolgend wird die Erfindung anhand der in den Zeichnungen dargestellten Ausführungsbeispiele eingehend erläutert. Es zeigt dabei
Fig.1 eine Vorderansicht des Steckdübels einer Ausführungsform des erfindungsgemäßen Befestigungssystems;
Fig.2 einen Schnitt entlang der Linie B-B der in Fig.1 gezeigten Ausführungsform;
Fig.3 einen Schnitt entlang der Linie C-C der in Fig.1 gezeigten Ausführungsform;
Fig.4 einen Schnitt entlang der Linie A-A der in Fig.1 gezeigten Ausführungsform;
Fig.5 ein vergrößertes Detail der in Fig.4 dargestellten Schnittdarstellung;
Fig.6, 7 und 8 Schrägrißdarstellungen des Steckdübels einer Ausführungsform des Steckdübels wieder in seinen unverformten Zustand übergeführt, so bewirkt dies eine geringe Bewegung des Steckdübels aus dem Bohrloch heraus, sodaß die bereits einsetzende Verkeilwirkung im Bohrloch gesteigert wird.

Die Erfindung betrifft auch einen Steckdübel zum Fixieren von Funktionselementen mit einem bekannten Dübelkopf und unter Verwendung eines Dübelschafts, wie er im erfindungsgemäßen Befestigungssystem seine Anwendung findet.

Weiters betrifft die Erfindung auch eine Klemmschelle für Rohre, insbesondere zur Aufnahme elektrischer Leitungen, mit einer Aufnahmeöffnung für ein Rohr und quer zur Längsachse der Rohr-Aufnahmeöffnung verlaufenden Vertiefungen zum Einschnappen in eine Profilschiene sowie parallel zur Längsachse der Rohr-aufnahmeöffnung verlaufenden Nuten und gegengleichen Federn zum stirnseitigen Verbinden mit weiteren Klemmschellen, wobei eine Befestigungsöffnung zum Einbringen eines Befestigungselements ausgebildet ist.

Um eine Anwendung in sämtlichen bekannten Befestigungssystemen und im erfindungsgemäßen Befestigungssystem zu ermöglichen ist erfingdungsgemäß vorgesehen, daß die Befestigungsöffnung einen Durchmesser aufweist, der das Einbringen eines Steckdübels ermöglicht.

Die erfindungsgemäße Klemmschelle kann somit zur Verwendung in einem erfindungsgemäßen Befestigungssystem als auch in einem herkömmlichen Schienenbefestigungssystem eingesetzt werden.

Ferner betrifft die Erfindung ein Verfahren zum Einstecken eines in einem Funktionselement eingesetzten Steckdübels in ein Bohrloch.

Um die Festigkeit des Steckdübelsitzes zu erhöhen, wird erfindungsgemäß vor dem Einstecken des Steckdübels in das Bohrloch das Funktionselement mit der Hand so verformt, daß der Steckdübel um einen Abstand weiter aus dem Funktionselement vorragt als im unverformten Zustand, und die gesamte vorragende Länge des Steckdübels wird in das Bohrloch eingebracht, und danach wird die Verformung des Funktionselements durch Loslassen desselben aufgehoben, wodurch auf den Steckdübel im Bohrloch eine Zugspannung ausgeübt wird, welche die Verkeilung des Steckdübels im Bohrloch erhöht.

Eine Variante des Verfahrens kann dabei unter Anwendung eines erfindungsgemäßen Befestigungssystems darin bestehen, daß die Installations-Klemmschelle durch Zusammendrücken ihrer Klemmschenkel vor dem Einstecken des Steckdübels verformt wird. Die Klemmschenkel können dabei mit den Fingern einer Hand rasch und ohne zusätzliche Hilfsmittel so zusammengedrückt werden, daß die Klemmschelle nachgibt und der Steckdübel entsprechend weiter aus der Klemmschelle vorragt. Nach dem Loslassen der Klemmschelle im eingesteckten Zustand des Steckdübels wird dieser durch die elastische, rücktreibende Kraft der verformten Klemmschelle, die sich in den unverformten Zustand zurückbewegt, im Bohrloch verspannt und sitzt in diesem nunmehr fest.

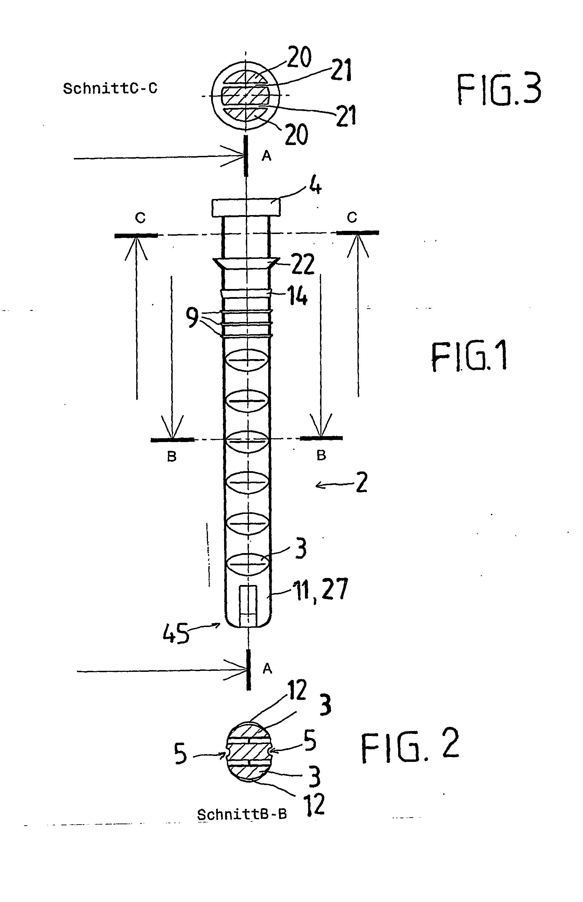

Nachfolgend wird die Erfindung anhand der in den Zeichnungen dargestellten Ausführungsbeispiele eingehend erläutert. Es zeigt dabei
Fig.1 eine Vorderansicht des Steckdübels einer Ausführungsform des erfindungsgemäßen Befestigungssystems;
Fig.2 einen Schnitt entlang der Linie B-B der in Fig.1 gezeigten Ausführungsform;
Fig.3 einen Schnitt entlang der Linie C-C der in Fig.1 gezeigten Ausführungsform;

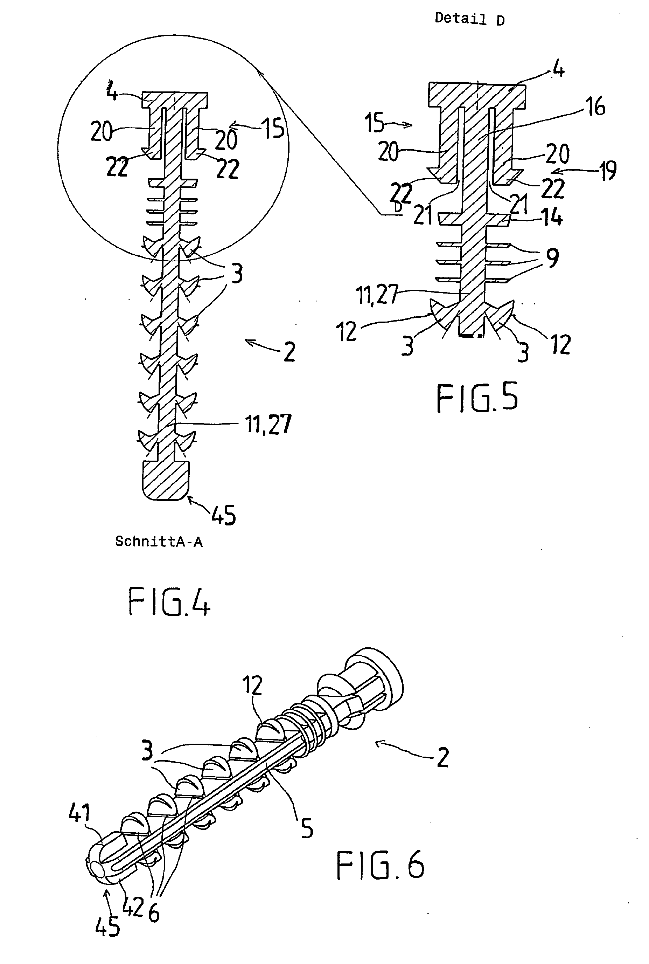

Fig.4 einen Schnitt entlang der Linie A-A der in Fig.1 gezeigten Ausführungsform;
Fig.5 ein vergrößertes Detail der in Fig.4 dargestellten Schnittdarstellung;

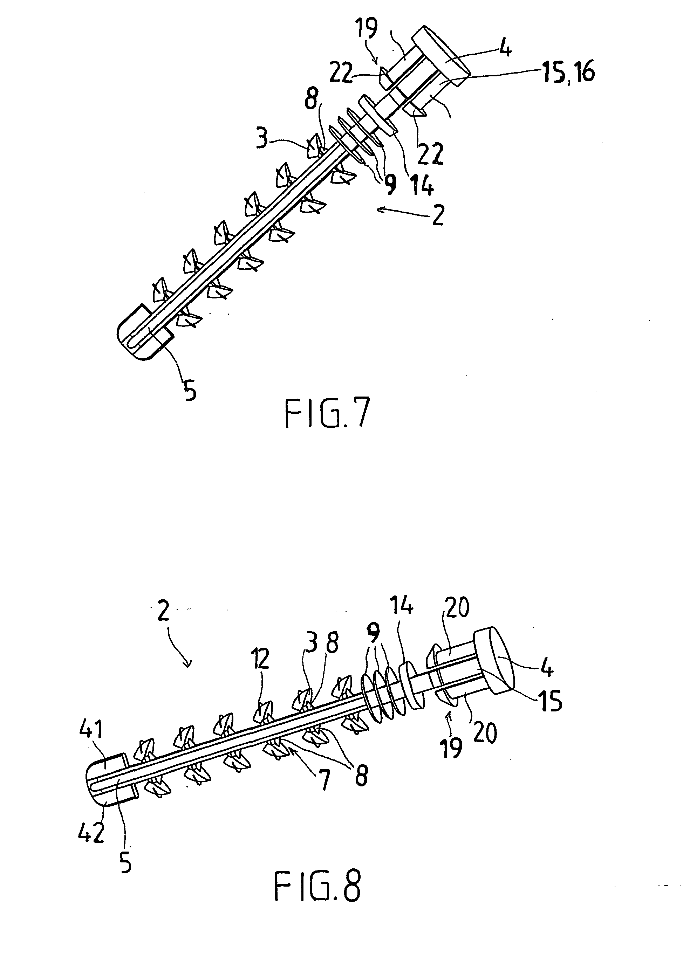

Fig.6, 7 und 8 Schrägrißdarstellungen des Steckdübels einer Ausführungsform des erfindungsgemäßen Befestigungssystems;

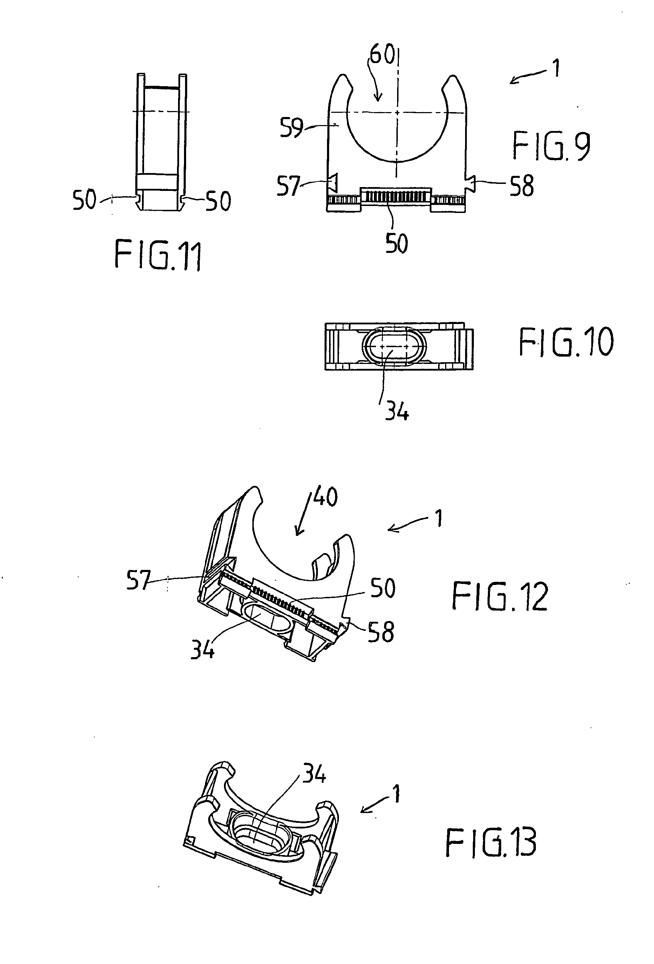

Fig.9 eine Vorderansicht des Funktionselements einer Ausführungsform des erfindungsgemäßen Befestigungssystems;
Fig.10 eine Draufsicht auf das Funktionselement gemäß Fig.9;
Fig.11 eine Seitenansicht des Funktionselements gemäß Fig.9;
Fig.12 und 13 Schrägrißansichten des Funktionselements gemäß Fig.9;

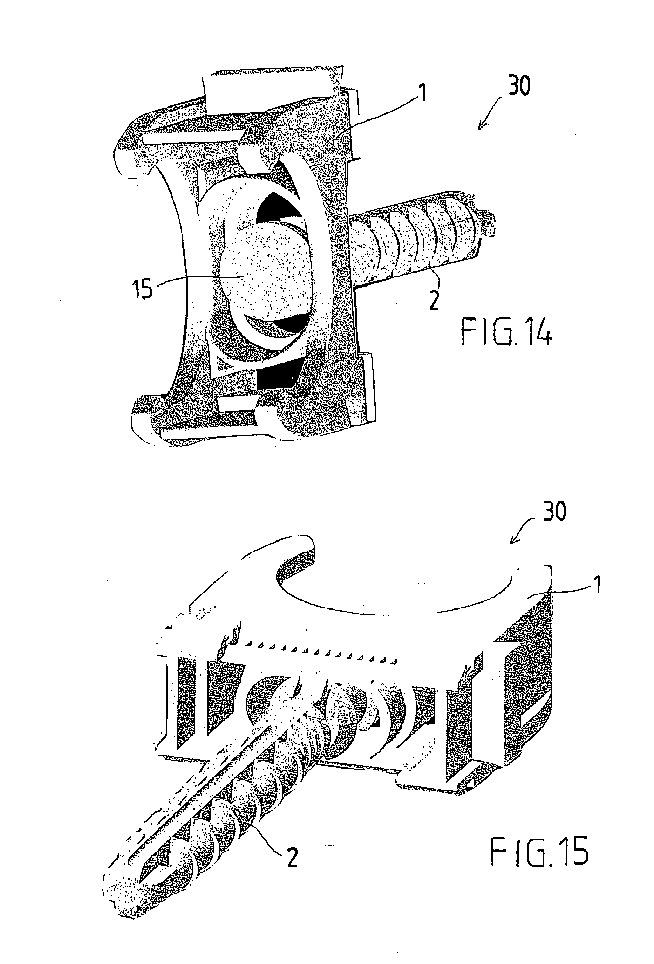

Fig.14 und 15 Schrägrißansichten des Funktionselements gemäß Fig.9 mit einem eingesetzten Steckdübel gemäß Fig.6, 7 und 8.

Fig.14 und 15 zeigen ein erfindungsgemäßes Befestigungssystem 30, das sich aus einem Steckdübel 2 und einem Funktionselement 1 zusammensetzt, wobei das Funktionselement 1 im gezeigten Ausführungsbeispiel durch eine Installations-Klemmschelle aus Kunststoff gebildet ist. Das Funktionselement 1 kann jedoch beliebig anders gestaltet sein, z.B. als ein Kabelträger, eine Leitungstrasse, Klemmbügel, Sammelhalter oder ähnliche in der Elektro- und Rohr-Installationstechnik angewandte Elemente. Darüber hinaus kann das Funktionselement 1 auch jede andere beliebige Vorrichtung, Einheit oder Element sein, welche bzw. welches an einem Baukörper, wie einer Wand oder einer Decke zu befestigen ist.

Alle gezeigten Ausführungsformen sind als Spritzgußteile gefertigt, können aber in jeder beliebigen anderen Herstellungstechnologie ausgebildet sein.

Der Steckdübel 2 besitzt aufgrund seiner besonderen Bauform die Eigenschaft, nach dem Einstecken in ein Bohrloch sich in diesem zu verspreizen, sodaß er ohne weiteren Montageschritt sofort eine Zuglast aufnehmen kann.

Beim erfindungsgemäßen Befestigungssystem 30 ist der Steckdübel 2 mit seinem Dübelkopf 15 in eine Befestigungsöffnung 34 des Funktionselements 1 eingesetzt. In diesem Zustand kann das Funktionselement 1 durch Einbringen des Dübelschafts 27 in ein Bohrloch befestigt werden.

Erfindungsgemäß ist das Funktionselement 1 gegenüber dem in das Funktionselement 1 eingesetzten Dübelkopf 15 frei um die Längsachse des Steckdübels 2 verdrehbar. Auf diese Weise kann das Funktionselement nach dem Einstecken des Steckdübels 2 durch Verdrehen nachjustiert werden.

Fig.9 bis 13 zeigen die Befestigungsöffnung 34 der Klemmschelle 1, welche zusätzlich langlochartig ausgebildet ist, sodaß neben der Verdrehbarkeit des Dübelkopfes 15 auch eine Verschiebbarkeit innerhalb der Begrenzung der Langlochabmessungen gegeben ist.

Die gezeigte Ausführungsform der Klemmschelle 1 ist für die Halterung von Rohren gedacht, die insbesondere zur Aufnahme elektrischer Leitungen bestimmt sind, wobei eine Aufnahmeöffnung 60 für ein Rohr und quer zur Längsachse der Rohr-Aufnahmeöffnung 60 verlaufende Vertiefungen 50 zum Einschnappen in eine nicht dargestellte Profilschiene sowie parallel zur Längsachse der Rohraufnahmeöffnung 60 verlaufende Nuten 57 und gegengleiche Federn 58 zum stirnseitigen Verbinden mit weiteren Klemmschellen vorgesehen sind. Die Befestigungsöffnung 34 weist im Unterschied zu bisher bekannten Klemmschellen einen Durchmesser auf, der das Einbringen des Steckdübels 2 ermöglicht.

Das Funktionselement 1 und der Steckdübel 2 werden getrennt gefertigt und danach der Steckdübel 2 in das Funktionselement 2 eingesetzt, indem der Steckdübel mit seinem Dübelschaft 27 in die Befestigungsöffnung 34 in Pfeilrichtung 40 (Fig.13) eingeführt wird.

Die Befestigungsöffnung 34 des Funktionselements 1 ist zu diesem Zweck als ein Durchgangsloch mit einer Querschnittserweiterung gebildet, wobei die Übergangsstelle der Querschnittserweiterung eine Anlagefläche für den Endflansch 4 des Dübelkopfs 15 ausbildet.

Dementsprechend ist der Dübelkopf 15 aus einem zylinderförmigen Grundkörper 16 gebildet, der einen Endflansch 4 aufweist, wobei der Durchmesser des zylindrischen Grundkörpers 15 kleiner als die kleinste Öffnungsweite der Befestigungsöffnung 34 des Funktionselements 1 ist.

Beim Einsetzen des Dübelschafts 27 gelangt schließlich der Endflansch 4 des Dübelkopfes 15 in Kontakt mit der Anlagefläche der Befestigungsöffnung 34. Um ein Herausfallen des Dübels 2 zu verhindern, ist am Dübelkopf 15 eine Rastvorrichtung 19 vorgesehen, sodaß er in seiner in das Funktionselement 1 eingesetzten Stellung mit diesem verrastbar ist, dabei seine Verdrehbarkeit beibehält.

Der Steckdübel 2 ist in seiner verrasteten Stellung im Funktionselement 1 drehbar gelagert und dabei aber entlang seiner Längsrichtung gegenüber dem Funktionselement 1 unverrückbar verrastet.

Dazu sind zwei, in Richtung zum Dübelschaft 15 hin randoffene Schlitze 21 ausgenommen, welche sich parallel zur Dübellängsachse erstrecken und zwei Rastschenkel 20 ausbilden, an deren Enden halbkegelstumpfförmige Rastnasen 22 angeformt sind, deren Mantelflächen über den Durchmesser des zylindrischen Dübelkopfes 15 bzw. des zylindrischen Grundkörpers 16 hinausragen, wodurch beim Einbringen des Dübels 2 in die Befestigungsöffnung 34 die Rastschenkel 20 zunächst durch Verengung der Schlitze 21 zusammengedrückt werden, nach Anliegen des Endflansches 4 an der Anlagefläche der Befestigungsöffnung 34 diese zurückfedern, wodurch die Rastnasen 22 in Raststellung gelangen und ein Herausgleiten des Dübelkopfes 15 aus dem Funktionselement 1 verhindern.

Der Steckdübel 2 ist nunmehr im Funktionselement 1 eingerastet, dieses kann aber in der Befestigungsöffnung 34 um die Längsachse des Dübels verdreht werden. Solcherart kann nunmehr das Funktionselement 1 an einer Wand, Decke od. dgl. angebracht werden, indem der Steckdübel 2 in ein passendes Bohrloch so eingesteckt wird, daß das Funktionselement 1 an der Wand zum Anliegen kommt. Aufgrund der Verspreizfunktion des Steckdübels 2 hält dieser das Funktionselement 1 an der Wand, das Funktionselement 1 ist aber weiterhin gegenüber dem in der Wand fixierten Dübel 2 verdrehbar, sodaß eine Positions-Nachjustierung möglich ist. Zur Festlegung im Bohrloch der Wand weist der Dübelschaft 27 entlang seiner Längserstreckung an sich bekannte Spreizkörper 3 auf, welche im Rahmen der Erfindung auch auf andere Weise realisiert werden können.

Wie aus den Fig.6, 7 und 8 zu ersehen ist, sind die Spreizkörper 3 in der dort dargestellten Ausführungsform paarweise gegenüberliegend und gleichmäßig entlang der Längsachse des Dübelschafts 27 beabstandet angeordnet, der seinerseits durch einen stabförmigen Schaftkörper 11 gebildet ist.

Die Spreizkörper sind durch elastisch-gelenkig an den Breitseiten des stabförmigen Schaftkörpers 11 angeformte Exzenterkörper 3 gebildet, die jeweils eine vom Dübelschaft 27 weg orientierte gekrümmte Abrollfläche aufweisen (Fig.4, 5). Geeignet dimensionierte Querschnittsverengungen am Übergang zwischen den Spreizkörpern 3 und dem Dübelschaft 27 bilden elastische Gelenkstege 6 aus und sorgen für eine ausreichende elastische Verschwenkbarkeit der Spreizkörper bzw. Exzenterkörper 3. Die Gelenkstege 6 erstrecken sich in Ebenen senkrecht zur Dübellängsachse.

Beim Einstecken des Steckdübels 2 in ein Bohrloch werden die Exzenterkörper 3 durch Abrollen an ihren Abrollflächen in Richtung zum Dübelschaft 37 bewegt, wobei die Abrollflächen der Exzenterkörper 3 als Kugelteilflächen vorliegen.

Sowohl die elastischen Gelenkstege 6 als auch die Form der Exzenterkörper bzw. Spreizkörper 3 und der Verlauf der Abrollflächen können dabei beliebig gewählt sein. Die Exzenterkörper 3 sind im gezeigten Ausführungsbeispiel so ausgebildet, daß sie sich im eingesteckten Zustand des Dübelschaftes 27 gegen die Wandung des Bohrloches so anlegen, daß bei Zugbeanspruchung des Steckdübels 2 die auf die Exzenterkörper 3 wirkenden Reibungskräfte ein Herausgleiten des Steckdübels 2 verhindern, weil sie diese aus ihrer an der Bohrlochwandung anliegenden Stellung herauszudrehen bestrebt sind, wodurch die Exzenterkörper 3 entsprechend gegen die Bohrlochwandung gepreßt werden und das Herausgleiten verhindern.

Auf den Abrollflächen der Exzenterkörper 3 sind zusätzliche, sichelförmige Spreizstege 12 mit einer Dicke von z.B. 1mm angeformt, die im nicht eingesteckten Zustand des Steckdübels 2 jeweils ungefähr in einem rechten Winkel zur Dübellängsachse aus dem Dübelquerschnitt vorragen und im eingesteckten Zustand des Steckdübels 2 dessen Verspreizung mit der Bohrlochwandung entsprechend verbessern. Die Anzahl dieser Spreizstege 12 auf den Exzenterkörpern 3 und ihre Form kann auf verschiedene Weise variiert werden.

In der Ausführungsform gemäß Fig. 6, 7 und 8 sind zusätzlich auf die Exzenterkörper 3 wirkende Vorspannmittel 7 vorgesehen, welche die Exzenterkörper 3 gegen das auf sie während des Einsteckvorganges wirkende Drehmoment vorspannen, wodurch eine schnelle Verspreizung begünstigt wird. Dabei sind die Vorspannmittel 7 als in einem rechtem Winkel zu den Gelenksteg-Ebenen und zu den Breitseiten des Schaftkörpers 11 verlaufende, dreieckförmige Federstege 8 zwischen dem Schaftkörper 11 und den Exzenterkörpern 3 angeformt. Sämtliche Federstege 8 liegen in einer durch die Dübellängsachse verlaufenden Ebene liegen, die in einem rechten Winkel zu den Breitseiten des Schaftkörpers steht. Diese besondere Form der Vorspannmittel 7 kann konstruktiv abgeändert werden, ohne den Rahmen der Erfindung zu verlassen.

An den Schmalseiten des stabseitigen Schaftkörpers 1 ausgebildete Längsrillen 5 dienen dem Abführen von Materialrückständen, die beim Bohren des Bohrloches, in welches der Steckdübel 2 eingesteckt wird, im Bohrloch zurückbleiben können.

Weiters sind im Bereich des Dübelkopfes 15 drei zur Dübellängsachse konzentrische und gleich beabstandete, konzentrische Stützscheiben 9 auf dem Dübelschaft 27 angeordnet, deren Durchmesser in Richtung zum Dübelkopf 15 progressiv ansteigt, die sich in einer zur Dübellängsachse senkrecht verlaufenden Ebene erstrecken und einen Durchmesser aufweisen, der größer als der Dübel-Nenndurchmesser ist. Somit ragen diese Stützscheiben 9 etwas über den Dübel-Nenndurchmesser vor, sodaß diese sich nach dem Einstecken des Steckdübels 2 in das Bohrloch dachförmig verformen und auf diese Weise ein wenn auch geringfügiges Zurückrutschen des Steckdübels 2, das sich beim Einstellen des Kraftschlusses zwischen den Spreizkörpern 3 und der Bohrlochwandung ergeben kann, verhindern helfen. Bedingt durch die Spannwirkung der Stützscheiben 9 tritt eine resultierende Kraft auf, die den Steckdübel 2 in das Bohrloch hineinzieht.

Die Anzahl und die Beabstandung der Stützscheiben 9 sowie deren Durchmesser kann den Erfordernissen beliebig angepaßt werden.

Weiters ist im Bereich des Dübelkopfes 15 eine zur Dübellängsachse konzentrische Abschlußscheibe 14 auf dem Dübelschaft 27 angeordnet, welche einen Durchmesser aufweist, der ungefähr dem Dübel-Nenndurchmesser entspricht. Sie schließt mit einer Scheibenstärke von z.B. mindestens 1 mm das Bohrloch sauber ab und verhindert dadurch zuverlässig ein Austreten von Bohrrückständen aus dem Bohrloch im Gebrauchszustand des erfindungsgemäßen Befestigungssystems.

An der Dübelspitze bzw. am freien Ende des Dübeischaftes 27 ist ein im Querschnitt im wesentlichen kreuzförmiges Dübelführungselement 45 angeordnet, das durch zwei zu den Breitseiten des Dübelgrundkörpers im rechten Winkel angeformten Führungsrippen 41, 42 gebildet ist, wobei das kreuzförmige Dübelführungselement 45 zum Dübelschaftende hin abgerundet verläuft und dadurch das Einstecken des Dübelschaftes 27 in das Bohrloch erleichtert.

In der Praxis hat sich das nachstehend beschriebene Verfahren zum Einstecken eines in einem Funktionselement 1 eingesetzten Steckdübels 2, wie er z.B. in Fig.14 und Fig.15 dargestellt ist, bewährt. Vor dem Einstecken des Steckdübels 2 in das Bohrloch wird das Funktionselement 1 mit der Hand so verformt, daß der Steckdübel 2 um einen Abstand weiter aus dem Funktionselement 1 vorragt als im unverformten Zustand. In dieser Stellung wird die gesamte vorragende Länge des Steckdübels 2 in das Bohrloch eingebracht. Danach wird die Verformung des Funktionselements 1 durch Loslassen desselben aufgehoben, wodurch auf den Steckdübel 2 im Bohrloch eine Zugspannung ausgeübt wird, welche die Verkeilung des Steckdübels 2 im Bohrloch erhöht.

Die Verformung wird bei der in Fig.14 und 15 dargestellten Ausführungsform der Installations-Klemmschelle 1 durch Zusammendrücken ihrer Klemmschenkel vor dem Einstecken des Steckdübels 2 in Richtung der Pfeile 60 erreicht. Dann ragt der Steckdübel 2 in Richtung 61 entsprechend dem Grad der Verformung um einen Abstand weiter aus der Klemmschelle 1 hervor. Dies wird bewirkt, indem jene Kante des Befestigungsloches 34, an der die Rastvorrichtung 19 des Steckdübels 2 einrastet gegenüber der Auflagefläche der Klemmschelle 1 an der Wand höhenversetzt ausgeführt ist. Bei Verformung der Klemmschelle 1 biegt sich die Rastvorrichtungskante und mit dieser der eingerastete Steckdübel 2 aus der Klemmschelle 1 heraus. Sobald die Verformung aufgehoben wird, zieht sich der Steckdübel 2 entsprechend wieder zurück.

## Patentansprüche

1. Befestigungssystem, welches einen Steckdübel (2) und ein Funktionselement (1) umfaßt, wobei der Steckdübel (2) mit seinem Dübelkopf (15) in eine Befestigungsöffnung (34) des Funktionselements (1) einsetzbar und das Funktionselement (1) durch Einbringen des Dübelschafts (27) in ein Loch befestigbar ist, wobei der Steckdübel (2) im Loch drehfest selbstklemmend ist und das Funktionselement (1) gegenüber dem in das Funktionselement (1) eingesetzten Dübelkopf (15) frei um die Längsachse des Steckdübels (2) verdrehbar ist, wobei der Dübelkopf (15) eine Rastvorrichtung (19) aufweist, sodaß er in seiner in das Funktionselement (1) eingesetzten Stellung mit diesem verrastbar ist, wobei der Steckdübel (2) in seiner verrasteten Stellung das Funktionselement (1) drehbar lagert, **dadurch gekennzeichnet, daß** durch die Rastvorrichtung (19) der Steckdübel (2) entlang der Längsrichtung des Steckdübels (2) unverrückbar lagert, und daß die Befestigungsöffnung (34) des Funktionselements (1) langlochartig ausgebildet ist, sodaß neben der Verdrehbarkeit des Dübelkopfes (15) auch eine Verschiebbarkeit des Funktionselements (1) gegeben ist.

2. Befestigungssystem nach Anspruch 1, **dadurch gekennzeichnet, daß** das Funktionselement (1) eine Installations-Klemmschelle ist.

3. Befestigungssystem nach Anspruch 1 oder 2, **dadurch gekennzeichnet, daß** das Funktionselement ein Kabelträger ist.

4. Befestigungssystem nach einem der vorhergehenden Ansprüche, **dadurch gekennzeichnet, daß** die Rastvorrichtung (19) des Dübelkopfes (15) durch zwei, in Richtung zum Dübelschaft (27) hin randoffene Schlitze (21), welche sich parallel zur Dübellängsachse erstrecken und zwei Rastschenkel (20) ausbilden, und durch an den Enden der Rastschenkel (20) angeformte halbkegelstumpfförmige Rastnasen (22) gebildet ist.

5. Befestigungssystem nach einem der Ansprüche 1 bis 4, **dadurch gekennzeichnet, daß** der Dübelkopf (15) aus einem zylinderförmigen Grundkörper (16) gebildet ist, der einen Endflansch (4) aufweist, wobei der Durchmesser des zylindrischen Grundkörpers (16) kleiner als die kleinste Öffnungsweite der Befestigungsöffnung (34) des Funktionselements (1) ist.

6. Befestigungssystem nach Anspruch 5, **dadurch gekennzeichnet, daß** die Befestigungsöffnung (34) des Funktionselements (1) durch ein Durchgangsloch mit einer Querschnittserweiterung gebildet ist, wobei die Übergangsstelle der Querschnittserweiterung eine Anlagefläche für den Endflansch (4) des Dübelkopfs (15) ausbildet.

7. Befestigungssystem nach einem der vorhergehenden Ansprüche, **dadurch gekennzeichnet, daß** der Dübelschaft (27) entlang seiner Längserstreckung Spreizkörper aufweist.

8. Befestigungssystem nach Anspruch 7, **dadurch gekennzeichnet, daß** die Spreizkörper paarweise gegenüberliegend und gleichmäßig entlang der Längsachse des Dübelschafts (27) beabstandet angeordnet sind.

9. Befestigungssystem nach Anspruch 7 oder 8, **dadurch gekennzeichnet, daß** der Dübelschaft (27) durch einen stabförmigen Schaftkörper (11) gebildet ist.

10. Befestigungssystem nach Anspruch 9, **dadurch gekennzeichnet, daß** die Spreizkörper - in an sich bekannter Weise - durch elastisch-gelenkig an den Breitseiten des stabförmigen Schaftkörpers (11) angeformte Exzenterkörper (3) gebildet sind, die jeweils eine vom Dübelschaft (27) weg orientierte gekrümmte Abrollfläche aufweisen.

11. Befestigungssystem nach Anspruch 10, **dadurch gekennzeichnet, daß** die Exzenterkörper (3) über elastische Gelenkstege (6) schwenkbar mit dem Schaftkörper (11) verbunden sind, und daß zusätzlich auf die Exzenterkörper (3) wirkende Vorspannmittel (7) vorgesehen sind, welche die Exzenterkörper (3) gegen das auf sie während des Einsteckvorganges wirkende Drehmoment vorspannen.

12. Befestigungssystem nach Anspruch 11, **dadurch gekennzeichnet, daß** die Gelenkstege (6) sich in Ebenen senkrecht zur Dübellängsachse erstrecken, und daß die Vorspannmittel (7) als in einem rechtem Winkel zu den Gelenksteg-Ebenen und zu den Breitseiten des Schaftkörpers (11) verlaufende Federstege (8) zwischen dem Schaftkörper (11) und den Exzenterkörpern (3) angeformt sind.

13. Befestigungssystem nach Anspruch 12, **dadurch gekennzeichnet, daß** Federstege (8) dreieckförmig ausgebildet sind.

14. Befestigungssystem nach Anspruch 12 oder 13, **dadurch gekennzeichnet, daß** sämtliche Federstege (8) in einer durch die Dübellängsachse verlaufenden Ebene liegen, die in einem rechten Winkel zu den Breitseiten des Schaftkörpers (11) steht.

15. Befestigungssystem nach einem der Ansprüche 9 bis 14, **dadurch gekennzeichnet, daß** an zumindest einer Schmalseite des stabseitigen Schaftkörpers (1) eine Längsrille (5) zum Abführen von Materialrückständen ausgebildet ist.

16. Befestigungssystem nach einem der Ansprüche 10 bis 15, **dadurch gekennzeichnet, daß** die Abrollflächen der Exzenterkörper (3) als Kugelteilflächen ausgebildet sind.

17. Befestigungssystem nach einem der Ansprüche 10 bis 16, **dadurch gekennzeichnet, daß** jeweils ein oder mehrere Spreizstege (12) auf den Abrollflächen der Exzenterkörper (3) angeformt sind, die im nicht eingesteckten Zustand des Steckdübels (2) jeweils ungefähr in einem rechten Winkel zur Dübellängsachse aus dem Dübelquerschnitt vorragen.

18. Befestigungssystem nach Anspruch 17, **dadurch gekennzeichnet, daß** die Spreizstege (12) sichelförmig ausgebildet sind.

19. Befestigungssystem nach einem der vorhergehenden Ansprüche, **dadurch gekennzeichnet, daß** im Bereich des Dübelkopfes (15) zumindest eine zur Dübellängsachse konzentrische Stützscheibe (9) auf dem Dübelschaft (11) angeordnet ist, die sich in einer zur Dübellängsachse senkrecht verlaufenden Ebene erstreckt und einen Durchmesser aufweist, der größer als der Dübel-Nenndurchmesser ist.

20. Befestigungssystem nach Anspruch 19, **dadurch gekennzeichnet, daß** mehrere gleich beabstandete, konzentrische Stützscheiben (9) vorgesehen sind, deren Durchmesser in Richtung zum Dübelkopf (15) progressiv ansteigt.

21. Befestigungssystem nach einem der vorhergehenden Ansprüche, **dadurch gekennzeichnet, daß** im Bereich des Dübelkopfes (15) eine zur Dübellängsachse konzentrische Abschlußscheibe (14) auf dem Dübelschaft angeordnet ist, welche einen Durchmesser aufweist, der ungefähr dem Dübel-Nenndurchmesser entspricht.

22. Befestigungssystem nach einem der vorhergehenden Ansprüche, **dadurch gekennzeichnet, daß** am freien Ende des Dübelschaftes (11) ein im Querschnitt im wesentlichen kreuzförmiges Dübelführungselement (45) angeordnet ist.

23. Befestigungssystem nach Ansprüche 22, **dadurch gekennzeichnet, daß** das kreuzförmige Dübelführungselement (45) durch zwei zu den Breitseiten des Dübelschaftes im rechten Winkel angeformten Führungsrippen (41, 42) gebildet ist.

24. Befestigungssystem nach Anspruch 22 oder 23, **dadurch gekennzeichnet, daß** das kreuzförmige Dübelführungselement (45) zum Dübelschaftende hin abgerundet verläuft.

## Claims

1. A mounting system comprising a plug (2) and a functional element (1), the head (15) of said plug (2) being insertable into a fastening orifice (34) of said functional element (1) and the functional element (1) being mountable by inserting the plug shank (27) into a hole, the plug (2) being non-rotatable and self-locking within the hole and the functional element (1) being freely rotatable around the plug's (2) longitudinal axis in relation to the plug head (15) which has been inserted into the functional element (1), the plug head (15) having a locking device (19) so that it can be locked with the functional element (1) when inserted therein, the plug (2), when in its locked position, holding the functional element (1) so that it may rotate, **characterised in that** the plug (2) is positioned immovably along the longitudinal direction of the plug (2) by the plug's (2) locking device (19) and **in that** the fastening orifice (34) of the functional element (1) has an oblong shape so that, in addition to the plug head's (15) rotatability, the functional element (1) is also displaceable.

2. The mounting system according to claim 1, **characterised in that** the functional element (1) is an installation clamp.

3. The mounting system according to claim 1 or 2, **characterised in that** the functional element is a cable tray.

4. The mounting system according to any one of the preceding claims, **characterised in that** the locking device (19) of the plug head (15) is formed by two slits (21) with edges which are open towards the plug shank (27), said slits (21) extending in parallel to the plug's longitudinal axis and forming two locking arms (20), and by locking projections (22) which are shaped like the halves of truncated cones and which are formed at the ends of the locking arms (20).

5. The mounting system according to any one of the claims 1 to 4, **characterised in that** the plug head (15) is formed of a cylindrical base body (16) having a terminal flange (4), the diameter of said cylindrical base body (16) being smaller than that of the smallest opening width of the fastening orifice (34) of the functional element (1).

6. The mounting system according to claim 5, **characterised in that** the fastening orifice (34) of the functional element (1) is formed by a through-hole, part of which has an enlarged cross-sectional area, the transitional area of the part with the enlarged cross-sectional area forming a bearing surface for the terminal flange (4) of the plug head (15).

7. The mounting system according to any one of the preceding claims, **characterised in that** the plug shank (27) has expanding elements along its longitudinal dimension.

8. The mounting system according to claim 7, **characterised in that** said expanding elements are arranged in opposite pairs and equally spaced apart along the longitudinal axis of the plug shank (27).

9. The mounting system according to claim 7 or 8, **characterised in that** the plug shank (27) is formed by a rod-shaped shank body (11).

10. The mounting system according to claim 9, **characterised in that** the expanding elements are formed by eccentric elements (3) which are elastically articulated to the broad sides of the rod-shaped shank body (11), as is known per se, said eccentric elements (3) having a curved rolling surface oriented away from the plug shank (27).

11. The mounting system according to claim 10, **characterised in that** the eccentric elements (3) are connected pivotably to the shank body (11) via elastic articulated webs and **in that**, additionally, biasing means (7) acting on the eccentric elements (3) are provided, biasing said eccentric elements (3) against the torque acting on them during the process of inserting.

12. The mounting system according to claim 11, **characterised in that** said articulated webs (6) extend in planes which are vertical to the plug's longitudinal axis and **in that** the biasing means (7) are formed between the shank body (11) and the eccentric elements (3) as resilient broad sides of the shank body (11).

13. The mounting system according to claim 12, **characterised in that** said resilient webs (8) are triangular.

14. The mounting system according to claim 12 or claim 13, **characterised in that** all the resilient webs (8) are located in a plane extending through the plug's longitudinal axis which is perpendicular to the broad sides of the shank body (11).

15. The mounting system according to any one of the claims 9 to 14, **characterised in that** a longitudinal groove (5) for transporting residual material away is provided at least on one short side of the rod-shaped shank body (11).

16. The mounting system according to any one of the claims 10 to 15, **characterised in that** the rolling surfaces of the eccentric elements (3) are shaped like parts of spherical surfaces.

17. The mounting system according to any one of the claims 10 to 16, **characterised in that** one or several expanding webs (12) are formed on the rolling surfaces of the each of the eccentric elements (3), said expanding webs (12) projecting from the plug's cross-section approximately at a right angle to the plug's longitudinal axis, when the plug (2) is not inserted.

18. The mounting system according to claim 17, **characterised in that** the expanding webs (12) are sickle-shaped.

19. The mounting system according to any one of the preceding claims, **characterised in that** at least one support disc (9) which is concentric in relation to the plug's longitudinal axis is arranged on the plug shank (11) in the area of the plug head (15), said support disc (9) extending in a plane which is vertical to the plug's longitudinal axis and having a diameter which is larger than the plug's nominal diameter.

20. The mounting system according to claim 19, **characterised in that** several concentric support discs (9) which are equally spaced apart and the diameters of which increase progressively towards the plug head (15) are provided.

21. The mounting system according to any one of the preceding claims, **characterised in that** a terminal disc (14) concentric in relation to the plug's longitudinal axis is provided on the plug shank in the area of the plug head (15), said terminal disc (14) having a diameter which corresponds approximately to the plug's nominal diameter.

22. The mounting system according to any one of the preceding claims, **characterised in that** a plug guiding element (45) which is essentially cross-shaped is provided at the free end of the plug shank (11).

23. The mounting system according to claim 22, **characterised in that** the cross-shaped plug guiding element (45) is formed by two guiding webs (41, 42) which are formed at a right angle to the short sides of the plug shank.

24. The mounting system according to claim 22 or claim 23, **characterised in that** the cross-shaped plug guiding element (45) is rounded towards the end of the plug shank.

## Revendications

1. Système de fixation qui comprend une cheville (2) et un élément fonctionnel (1), la tête (15) de ladite cheville (2) pouvant être insérée dans un orifice de fixation (34) dudit élément fonctionnel (1) qui peut être fixé par l'insertion de la tige (27) de la cheville dans un trou, ladite cheville (2) n'étant pas tournable et étant autoserrante dans ledit trou et l'élément fonctionnel (1) tournant librement autour l'axe longitudinal de la cheville (2) par rapport à la tête (15) de la cheville qui est insérée dans l'élément fonctionnel (1), ladite tête (15) ayant un dispositif d'enclenchement (19) pour enclencher l'élément fonctionnel (1) quand elle est insérée là-dedans, la cheville (2) fixant l'élément fonctionnel (1) d'une manière pivotante quand elle se trouve dans sa position enclenchée, **caractérisé en ce que** ladite cheville (2) ne peut pas être déplacée le long de la direction longitudinale de la cheville (2) grâce à son dispositif d'enclenchement (19) et **en ce que** l'orifice de fixation (34) de l'élément fonctionnel (1) est oblong pour que élément fonctionnel (1) soit aussi déplaçable pendant que la tête (15) de la cheville est tournable.

2. Système de fixation selon la revendication 1, **caractérisé en ce que** l'élément fonctionnel (1) est un collier de fixation d'installation.

3. Système de fixation selon la revendication 1 ou 2, **caractérisé en ce que** l'élément fonctionnel est un chemin de câble.

4. Système de fixation selon l'une des revendications précédentes, **caractérisé en ce que** le dispositif d'enclenchement (19) de la tête (15) de la cheville est formé par deux fentes (21) avec des arêtes ouvertes vers la tige (27) de la cheville, lesdites fentes (21) s'étendant parallèlement à l'axe longitudinal de la cheville et formant deux branches d'enclenchement (20), et par des talons d'enclenchement (22) qui ont la forme des moitiés de cônes tronqués et sont formés aux bouts des branches d'enclenchement (20).

5. Système de fixation selon l'une des revendications 1 à 4, **caractérisé en ce que** la tête (15) de la cheville est formée par un corps de base cylindrique (16) avec une bride terminale (4), le diamètre dudit corps de base cylindrique (16) étant plus petit que celui de la largeur d'ouverture la plus petite de l'orifice de fixation (34) de l'élément fonctionnel (1).

6. Système de fixation selon la revendication 5, **caractérisé en ce que** l'orifice de fixation (34) de l'élément fonctionnel (1) est formé par un trou de passage, une partie duquel a une superficie de section élargie, la zone de transition de ladite partie constituant une surface d'appui pour la bride terminale (4) de la tête (15) de la cheville.

7. Système de fixation selon l'une des revendications précédentes, **caractérisé en ce que** la tige (27) de la cheville a des éléments à expansion le long de son étendue longitudinale.

8. Système de fixation selon la revendication 7, **caractérisé en ce que** lesdits éléments à expansion sont aménagés deux à deux, les uns opposés aux autres, et écartés régulièrement le long de l'axe longitudinal de la tige (27) de la cheville.

9. Système de fixation selon la revendication 7 ou 8, **caractérisé en ce que** la tige (27) de la cheville est formée par un corps de tige (11) en forme de barre.

10. Système de fixation selon la revendication 9, **caractérisé en ce que** lesdits éléments à expansion sont formés par des éléments excentriques (3) qui sont flexiblement articulés aux côtés larges du corps de tige (11) en forme de barre, ce qui est per se connu, lesdits éléments excentriques (3) ayant une surface de roulement courbe détournée de la tige (27) de la cheville.

11. Système de fixation selon la revendication 10, **caractérisé en ce que** lesdits éléments excentriques (3) sont reliés de manière pivotable au corps (11) de la tige à travers des âmes articulées élastiques et **en ce que**, en plus, des moyens de précontrainte (7) qui agissent sur les éléments excentriques (3) sont prévus et précontraignent les éléments excentriques (3) contre le couple agissant sur ceux-ci au cours du processus de l'insertion.

12. Système de fixation selon la revendication 11, **caractérisé en ce que** lesdites âmes articulées (6) s'étendent dans des plaines verticales par rapport à l'axe longitudinal de la cheville et **en ce que** lesdits moyens de précontrainte (7) sont formés entre le corps (11) de la tige et les éléments excentriques (3) comme des âmes élastiques (8) qui s'étendent perpendiculairement aux plaines des âmes articulées et aux côtés larges du corps (11) de la tige.

13. Système de fixation selon la revendication 12, **caractérisé en ce que** lesdites âmes élastiques (8) sont triangulaires.

14. Système de fixation selon la revendication 12 ou 13, **caractérisé en ce que** toutes les âmes élastiques (8) sont disposées dans une plaine qui s'étend à travers l'axe longitudinal de la cheville qui est perpendiculaire aux côtés larges du corps (11) de la tige.

15. Système de fixation selon l'une des revendications 9 à 14, **caractérisé en ce qu'**une rainure longitudinale (5) pour évacuer de la matière résiduelle est prévue au moins sur un côté large du corps (11) de la tige en forme de barre.

16. Système de fixation selon l'une des revendications 9 à 15, **caractérisé en ce que** les surfaces de roulement des corps excentriques (3) ont la forme de parties d'une surface sphérique.

17. Système de fixation selon l'une des revendications 9 à 16, **caractérisé en ce qu'**une ou plusieurs âmes à expansion (12) sont formées sur les surfaces de roulement de chacun des éléments excentriques (3), lesdits âmes à expansion (12) faisant saillie de la section de la cheville environ à un angle droit par rapport à l'axe longitudinal de la cheville, quand la cheville (2) n'est pas insérée.

18. Système de fixation selon la revendication 17, **caractérisé en ce que** les âmes à expansion (12) sont en forme de croissant.

19. Système de fixation selon l'une des revendications précédentes, **caractérisé en ce qu'**au moins un disque de support (9) qui est concentrique par rapport à l'axe longitudinal de la cheville est disposé sur la tige (11) de la cheville près de la tête (15), ledit disque de support (9) s'étendant dans une plaine perpendiculaire par rapport à l'axe longitudinal de la cheville et ayant un diamètre qui est plus large que le diamètre nominal de la cheville.

20. Système de fixation selon la revendication 17, **caractérisé en ce que** plusieurs disques de support (9) qui sont écartés régulièrement et les diamètres desquels augmentent progressivement dans la direction de la tête (15) de la cheville.

21. Système de fixation selon l'une des revendications précédentes, **caractérisé en ce qu'**au moins un disque terminal (14) concentrique par rapport à l'axe longitudinal de la cheville est prévu sur la tige de la cheville près de la tête (15), ledit disque terminal (14) ayant un diamètre qui correspond à peu près au diamètre nominal de la cheville.

22. Système de fixation selon l'une des revendications précédentes, **caractérisé en ce qu'**un élément de guidage (45) pour la cheville qui est sensiblement cruciforme est prévu au bout libre de la tige (11) de la cheville.

23. Système de fixation selon la revendication 22, **caractérisé en ce que** ledit élément de guidage (45) cruciforme est formé par deux âmes de guidage (41, 42) qui sont formées à un angle droit par rapport aux côtés larges de la tige de la cheville.

24. Système de fixation selon la revendication 22 ou 23, **caractérisé en ce que** ledit élément de guidage (45) cruciforme est arrondi vers le bout de la tige de la cheville.
